# FASCICULE DE BREVET EUROPEEN

(11) **EP 1 664 598 B1**
(45) Date de publication et mention de la délivrance du brevet: **28.02.2007**
(21) Numéro de dépôt: 04787147.0
(22) Date de dépôt: 15.09.2004
(51) Int. Cl.: F16J 15/16, F16J 15/32

(54) **JOINT DYNAMIQUE AUTOCOMPENSE**
DYNAMISCHE SELBSTAUSGLEICHSDICHTUNG
SELF-COMPENSATING DYNAMIC JOINT

(30) Priorité: 16.09.2003 FR 0310866
(43) Date de publication de la demande: 07.06.2006
(73) Titulaire: Thales, 92200 Neuilly Sur Seine (FR)
(72) Inventeur: MOREAU, Dominique, Thales Intellectual Property, F-94117 Arcueil Cedex (FR)
(74) Mandataire: Henriot, Marie-Pierre
(86) Numéro de dépôt international: PCT/EP2004/052192
(87) Numéro de publication internationale: WO 2005/026586

(56) Documents cités:
- US-A- 3 361 430
- US-A- 5 217 232
- US-B1- 6 416 058

## Description

La présente invention concerne un joint dynamique autocompensé entre deux parties d'un équipement, une partie fixe et une partie mobile en rotation autour d'un axe de rotation de ladite partie fixe, pour assurer un degré d'étanchéité donné de l'équipement vis-à-vis de particules solides et/ou de fluides provenant de l'extérieur. Il est adapté notamment à l'étanchéité d'équipements aéronautiques embarqués sur un porteur.

Les équipements aéronautiques embarqués en charge externe subissent des environnements extrêmes de température, pression, agression par le sable, les poussières ou la pluie et doivent cependant garantir un niveau d'étanchéité suffisant pour tous les sous-ensembles du type optique ou laser situés à l'intérieur de l'équipement, afin de les maintenir en conditions opérationnelles dans toutes les configurations du domaine de vol du porteur. Aujourd'hui, ces performances sont atteintes par des joints dynamiques extrêmement coûteux du type joints ferrofluides.

US 5,217,232 présente un joint dynamique autocompensé de l'art antérieur, comprenant une pièce d'étanchéité et un élément de compensation annulaire monté dans la pièce d'étanchéité.

Afin de réduire les coûts, des joints standard de type joints à lèvres peuvent être utilisés, en association avec des absorbeurs d'humidité de type poudres déssicantes, qui peuvent pallier dans une certaine mesure le défaut d'étanchéité. Mais ces joints, classiquement réalisés en élastomère, présentent un coefficient de dilatation tel que soumis à une baisse de température, ils se rétractent, entraînant une diminution, voire une complète suppression de l'étanchéité du joint. Soumis à une hausse de température, ils se dilatent, augmentant le couple de frottement de façon inacceptable dans des équipements dans lesquels la puissance disponible est faible.

La présente invention permet de remédier aux inconvénients précités en proposant un joint dynamique bas coût, assurant le maintien de l'étanchéité et un couple de frottement constant ou faiblement variable, lors des variations de température.

Pour cela, le joint dynamique selon l'invention est autocompensé, grâce à l'association d'une pièce d'étanchéité de type classique avec un élément de compensation présentant un coefficient de dilatation donné et agencé de telle sorte que lors des variations de température, la dilatation ou la contraction de l'élément de compensation entraîne le déplacement de la pièce d'étanchéité de telle sorte notamment à maintenir l'étanchéité nécessaire.

Plus précisément, l'invention propose un joint dynamique autocompensé entre deux parties d'un équipement, une partie fixe et une partie mobile en rotation autour d'un axe de rotation de ladite partie fixe, pour assurer un degré d'étanchéité donné de l'équipement vis-à-vis de particules solides et/ou de fluides provenant de l'extérieur, comprenant lesdites deux parties, une pièce d'étanchéité et un élément de compensation, **caractérisé en ce que** :
- la pièce d'étanchéité de coefficient de dilatation donné avec la température, est pourvue d'une extrémité frottante avec une surface de frottement d'une première desdites parties, et est montée hermétiquement dans une structure mécanique rigide en liaison avec la seconde partie,
- l'élément de compensation, formant la liaison entre ladite structure mécanique et ladite seconde partie de façon hermétique, ledit élément de compensation étant déformable avec la température, est dimensionné de telle sorte que lors des variations de température, les déplacements de la structure mécanique résultant des déformations de l'élément de compensation assurent le maintien en contact de ladite extrémité frottante de la pièce d'étanchéité avec la surface de frottement de ladite première partie selon le degré d'étanchéité recherché.

L'invention concerne en outre une liaison rotative équipée d'un joint dynamique autocompensé selon l'invention.

D'autres avantages et caractéristiques apparaîtront plus clairement à la lecture de la description qui suit, illustrée par les figures annexées qui représentent :
- la figure 1, le schéma d'une vue partielle d'un équipement insérant une liaison rotative selon l'invention;
- la figure 2, le schéma d'un exemple de réalisation d'un joint dynamique autocompensé selon l'invention.

Sur ces figures, les éléments identiques sont indexés par les mêmes repères.

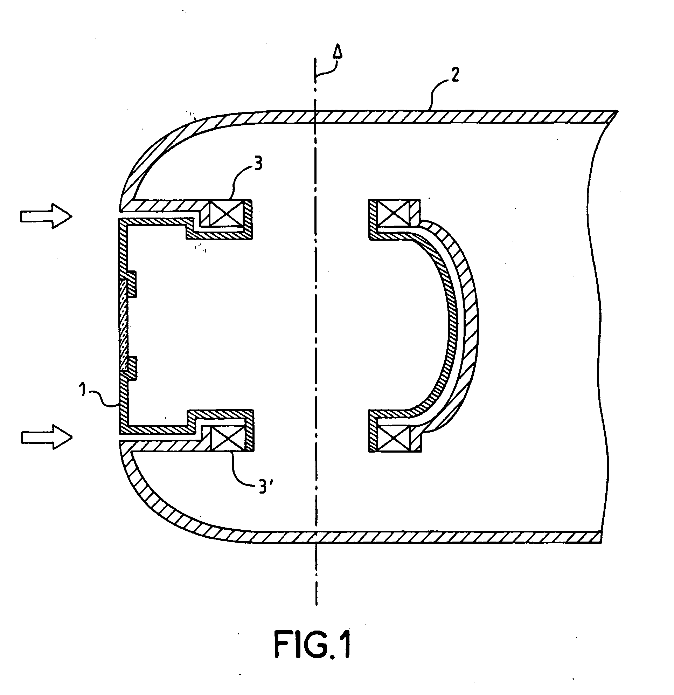

La figure 1 représente le schéma d'un équipement insérant une liaison rotative selon l'invention. Il s'agit par exemple d'un équipement aéronautique destiné à être embarqué, et comprenant des sous-ensembles optiques et électroniques afin d'assurer différentes fonctions de veille, de poursuite de cible, etc. Les sous-ensembles comprennent des composants de type laser, composants optiques et électroniques, sensibles aux variations de tempéraure et à l'humidité. L'équipement représenté comprend une partie mobile 1, en rotation autour d'un axe de rotation Δ d'une partie fixe 2. Deux liaisons 3, 3' assurent la rotation de la partie mobile autour de l'axe de rotation. Ces équipements sont conçus pour supporter des environnements extrêmes, tels que de très fortes variations de température (spécifications habituelles de -54° à +100°), des agressions extérieures (symbolisées par des flèches sur la figure 1) de type sable, poussière, pluie, et doivent cependant présenter un degré d'étanchéité aux fluides, et notamment à l'humidité, qui garantisse un taux de fuite extrêmement faible (quelques millibars par 24h) sous pression différentielle bi-directionnelle entre l'intérieur et l'extérieur de l'équipement de 1 bar typiquement.

Pour garantir le degré d'étanchéité, de telles liaisons rotatives comprennent un joint dynamique. Ce joint doit pouvoir résister à la pression différentielle entre l'intérieur et l'extérieur ainsi qu'aux variations de température. Un exemple de joint dynamique connu met en oeuvre un matériau ferrofluide maintenu jusqu'à un niveau de pression différentielle donné par un champ magnétique et permettant d'assurer un degré d'étanchéité aux fluides satisfaisant. Cependant, ce dispositif présente l'inconvénient d'être lourd, encombrant et très coûteux.

L'invention propose un joint dynamique autocompensé, de faible coût et très peu encombrant, qui permette l'utilisation d'un joint dynamique de type standard, comme un joint à lèvres, tout en garantissant un degré d'étanchéité suffisant.

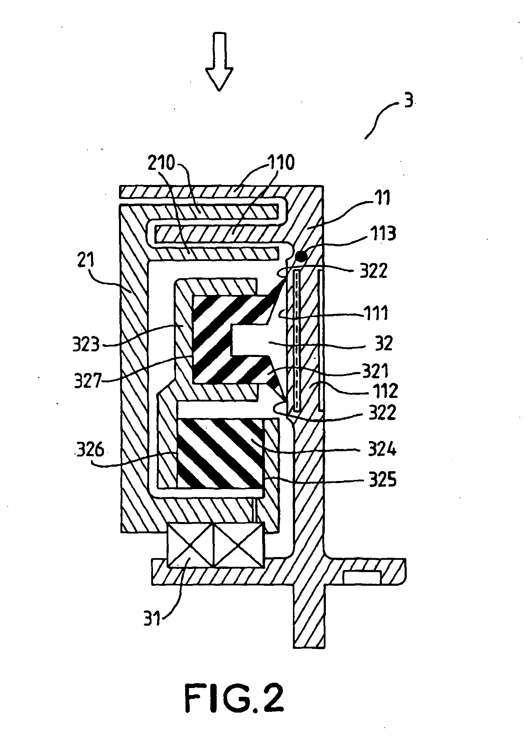

La figure 2 représente un exemple de réalisation d'une liaison rotative 3 entre deux parties d'un équipement, une partie fixe et une partie mobile, intégrant un joint dynamique autocompensé selon l'invention. Dans cet exemple, la liaison rotative comprend un premier flasque 11 solidaire d'une première desdites parties, par exemple la partie mobile et un second flasque 21 solidaire de la seconde partie, par exemple la partie fixe. Elle comprend en outre un palier tournant 31 monté entre les deux flasques 11 et 21 pour assurer la rotation de la partie mobile autour d'un axe de rotation (non représenté sur la figure 2) de la partie fixe et le joint dynamique autocompensé 32 permettant d'assurer le degré d'étanchéité recherché.

Selon l'invention, le joint dynamique 32 comprend une pièce d'étanchéité 321 de coefficient de dilatation donné avec la température, pourvue d'une extrémité frottante 322 avec une surface de frottement 111 d'une première partie (la partie fixe ou la partie mobile), et montée hermétiquement dans une structure mécanique rigide 323 en liaison avec la seconde partie. Dans cet exemple, la surface de frottement 111 est portée par le flasque 11 solidaire de la partie mobile et la structure mécanique est en liaison avec le flasque 21 solidaire de la partie fixe. Le joint dynamique comprend en outre un élément de compensation 324, formant la liaison entre la structure mécanique 323 et la seconde partie (dans cet exemple le flasque 21) de façon hermétique. Selon l'invention, l'élément de compensation 324 est déformable avec la température, dimensionné de telle sorte que lors des variations de température, les déplacements de la structure mécanique 323 résultant des déformations de l'élément de compensation assurent le maintien en contact de l'extrémité frottante 322 de la pièce d'étanchéité avec la surface de frottement 111 de la première partie selon le degré d'étanchéité recherché. L'étanchéité est ainsi assurée puisque les liaisons entre la pièce d'étanchéité 321 et la structure mécanique 323 d'une part, et celles entre la structure mécanique et l'élément de compensation 324, puis entre l'élément de compensation et la seconde partie (flasque 21) d'autre part sont hermétiques. Par ailleurs, le contact de l'extrémité frottante 322 avec la surface de frottement 111 de la première partie (flasque 11) est maintenu grâce à la déformation de l'élément de compensation qui, entraînant le déplacement de la pièce d'étanchéité par l'intermédiaire de la structure mécanique rigide, permet de compenser la déformation de la pièce d'étanchéité. Avantageusement, l'élément de compensation est dimensionné pour maintenir le degré d'étanchéité et le couple de frottement constant ou faiblement variable dans la gamme de variations de température. Ceci est particulièrement intéressant dans les systèmes, notamment les systèmes embarqués, dans lesquels la puissance disponible étant limitée, la liaison rotative risque de se bloquer en cas de couple de frottement trop grand.

Ainsi, grâce à la mise en oeuvre de l'élément de compensation, un joint classique de type joint à lèvres peut être utilisé comme pièce d'étanchéité, l'extrémité frottante 322 étant constituée d'une ou plusieurs lèvres, comme c'est le cas dans l'exemple de la figure 2. Le joint à lèvres peut être un joint standard, disponible dans le commerce. Au moins deux lèvres sont nécessaires notamment dans le cas d'une pression différentielle bi-directionnelle.

La figure 2 décrit un exemple de réalisation avantageux de l'élément de compensation 324. Il est formé d'une couronne en matériau de compensation déformable, de coefficient de dilatation donné avec la température. Le matériau est par exemple un matériau de type élastomère. La couronne est fixée d'une part à la seconde partie (flasque 21) par une première interface 325 sensiblement parallèle au plan de la surface de frottement 111 et située en vis-à-vis de ce plan, et d'autre part à la structure mécanique 323 par une seconde interface 326 sensiblement parallèle à la première et opposée au plan de la surface de frottement par rapport à la première interface. Dans l'exemple de la figure 2, la couronne est à section rectangulaire, d'autres formes sont bien sûr possibles. Ainsi lors d'une diminution de la température, la rétractation de l'élément de compensation va entraîner un déplacement de la structure mécanique et donc de la pièce d'étanchéité vers la surface de frottement, permettant de compenser la rétractation de la pièce d'étanchéité. Au contraire, si la température augmente, la dilatation de l'élément de compensation va entraîner un déplacement, de la structure mécanique dans la direction opposée, permettant de compenser la dilatation de la pièce d'étanchéité. L'élément de compensation est dimensionné de telle sorte que le produit du coefficient de dilatation du matériau de compensation par la distance entre les interfaces est adapté à l'amplitude de déformation de la pièce d'étanchéité dans la gamme de variation de température pour assurer le degré d'étanchéité recherché.

Dans certains cas, un gradient thermique peut exister au niveau de la liaison tournante entre la pièce d'étanchéité et l'élément de compensation. L'élément de compensation est alors dimensionné de telle sorte que le produit du coefficient de dilatation du matériau de compensation par la distance entre les interfaces soit adapté en outre audit gradient. Dans certains cas, l'élément de compensation peut être dimensionné pour compenser également les effets de dilatation des flasques.

En pratique, la pièce d'étanchéité 321 peut être formée simplement d'un bloc de matériau déformable de coefficient de dilatation donné, fixé à la structure mécanique 323 par une surface d'appui 327 sensiblement parallèle à la surface de frottement 111. Le matériau est par exemple un matériau de type élastomère. Le produit du coefficient de dilatation du matériau de compensation par la distance entre les interfaces 325, 326 est alors adapté au produit du coefficient de dilatation du matériau déformable formant la pièce d'étanchéité par la distance entre la surface d'appui 327 et l'extrémité frottante 322. Par exemple, si la liaison tournante est à température stabilisée, et que l'élément de compensation et la pièce d'étanchéité sont formés du même matériau, les deux distances sont sensiblement identiques pour obtenir le maintien du degré d'étanchéité. La distance entre les interfaces 325, 326 est ajustée différemment s'il existe un gradient thermique entre la pièce d'étanchéité et l'élément de compensation.

Le joint autocompensé selon l'invention peut être réalisé simplement et selon des techniques connues en fabriquant autour de la structure mécanique rigide un moule de la forme adaptée. Il peut être prévu de former la pièce d'étanchéité et l'élément de compensation, par exemple par injection dans le moule d'un matériau élastomère à chaud, l'adhésion du matériau élastomère sur les différentes interfaces se faisant lors du refroidissement. Si le même matériau est utilisé pour la pièce d'étanchéité et l'élément de compensation, le procédé de fabrication est encore facilité. Un matériau classiquement utilisé est par exemple le néoprène. Dans le cas où la pièce d'étanchéité est un joint standard, comme un joint à lèvres disponible dans le commerce, ce dernier est collé sur la structure mécanique et l'élément de compensation peut être fabriqué selon la métode décrite ci-dessus.

Avantageusement, comme cela est décrit sur la figure 2, chaque flasque 11, 21 peut supporter une ou plusieurs chicanes, respectivement notées 110, 210, les chicanes des deux flasques étant imbriquées les unes dans les autres pour former une sorte de labyrinthe permettant de protéger la pièce d'étanchéité 321 du joint dynamique 32 contre les agressions extérieures, telles que la poussière, le sable ou la pluie.

Selon une variante, le premier flasque 11 qui porte la surface de frottement 111 comprend à proximité de ladite surface de frottement un élément chauffant 112. Cet élément chauffant permet de dégivrer en cas de besoin l'extrémité frottante 322 de la pièce d'étanchéité. Par ailleurs, il permet de maintenir une température minimale de la surface de frottement, afin de garantir une valeur minimale du couple de frottement entre l'extrémité frottante de la pièce d'étanchéité et la surface de frottement portée par le flasque 11. Si nécessaire, le flasque 11 comprend en outre à proximité de la surface de frottement un capteur de température 113 pour le contrôle de l'élément chauffant. Le joint dynamique autocompensé selon l'invention n'est pas limité aux applications telles que décrites précédemment. Il s'applique avantageusement à tout dispositif présentant une liaison rotative entre une partie mobile et une partie fixe et dans laquelle il est nécessaire de maintenir un degré d'étanchéité dans une gamme de variations donnée de température.

## Revendications

1. Joint dynamique autocompensé (32) entre deux parties d'un équipement (11, 21), une partie fixe et une partie mobile en rotation autour d'un axe de rotation de ladite partie fixe, pour assurer un degré d'étanchéité donné de l'équipement vis-à-vis de particules solides et/ou de fluides provenant de l'extérieur, comprenant lesdites deux parties, une pièce d'étanchéité et un élément de compensation, **caractérisé en ce que** :
- la pièce d'étanchéité (321) de coefficient de dilatation donné avec la température, est pourvue d'une extrémité frottante (322) avec une surface de frottement (111) d'une première desdites parties (11), et est montée hermétiquement dans une structure mécanique rigide (323) en liaison avec la seconde partie (21),
- l'élément de compensation (324), formant la liaison entre ladite structure mécanique (323) et ladite seconde partie (21) de façon hermétique, ledit élement de compensation étant déformable avec la température, dimensionné de telle sorte que lors des variations de température, les déplacements de la structure mécanique (323) résultant des déformations de l'élément de compensation (324) assurent le maintien en contact de ladite extrémité frottante (322) de la pièce d'étanchéité (321) avec la surface de frottement (111) de ladite première partie (11) selon le degré d'étanchéité recherché.

2. Joint dynamique selon la revendication 1, dans lequel l'élément de compensation (324) est formé d'une couronne en matériau de compensation déformable, de coefficient de dilatation donné avec la température, ladite couronne étant fixée à ladite seconde partie (21) par une première interface (325) sensiblement parallèle au plan de la surface de frottement (111) et en vis-à-vis de celui-ci et à la structure mécanique (323) par une seconde interface (326) sensiblement parallèle à la première et opposée au plan de la surface de frottement par rapport à la première interface, le produit du coefficient de dilatation du matériau de compensation par la distance entre les interfaces étant adapté à l'amplitude de déformation de la pièce d'étanchéité dans la gamme de variation de température pour assurer le degré d'étanchéité recherché.

3. Joint dynamique selon la revendication 2, dans lequel un gradient thermique existant entre la pièce d'étanchéité (321) et l'élément de compensation (324), ledit produit du coefficient de dilatation du matériau de compensation par la distance entre les interfaces (325, 326) est adapté en outre audit gradient.

4. Joint dynamique selon la revendication 2, dans lequel la pièce d'étanchéité (321) est formée en un bloc de matériau déformable de coefficient de dilatation donné, fixé à la structure mécanique (323) par une surface d'appui (327) sensiblement parallèle à la surface de frottement (111), le produit du coefficient de dilatation du matériau de compensation par la distance entre les interfaces (325,326) étant adapté au produit du coefficient de dilatation dudit matériau déformable par la distance entre ladite surface d'appui (327) et l'extrémité frottante (322) de la pièce d'étanchéité (321).

5. Joint dynamique selon la revendication 4, dans lequel le matériau de compensation est identique au matériau déformable dont est formée la pièce d'étanchéité (321).

6. Joint dynamique selon l'une des revendications 4 ou 5, dans lequel les matériaux formant la pièce d'étanchéité (321) et l'élément de compensation (324) sont de type élastomère.

7. Joint dynamique selon l'une des revendications précédentes, dans lequel la pièce d'étanchéité (321) est un joint à lèvres, l'extrémité frottante (322) étant constituée d'une ou plusieurs lèvres.

8. Joint dynamique selon la revendication 7, dans lequel la pièce d'étanchéité (321) est un joint à lèvres de type standard.

9. Liaison rotative (3, 3') entre deux parties (1, 2) d'un équipement, une partie fixe et une partie mobile, comprenant un premier flasque (11) solidaire d'une première desdites parties, un second flasque (21) solidaire de la seconde partie, un palier tournant (31) monté entre les deux flasques pour assurer la rotation de la partie mobile autour d'un axe de rotation (Δ) de la partie fixe et un joint dynamique autocompensé (32) selon l'une des revendications précédentes, la surface de frottement (111) étant portée par ledit premier flasque (11) et la structure mécanique rigide (323) du joint dynamique supportée par ledit second flasque (21) de la seconde partie.

10. Liaison rotative selon la revendication 9, dans laquelle chaque flasque (11, 21) supporte une ou plusieurs chicanes (110, 210), les chicanes des deux flasques étant imbriquées pour protéger la pièce d'étanchéité du joint dynamique contre les agressions extérieures.

11. Liaison rotative selon l'une des revendications 9 ou 10, dans laquelle ledit premier flasque comprend à proximité de ladite surface de frottement un élément chauffant (112).

12. Liaison rotative selon la revendication 11, dans laquelle ledit premier flasque comprend en outre à proximité de ladite surface de frottement un capteur de température (113) pour le contrôle dudit élément chauffant.

## Claims

1. Self-compensating dynamic joint (32) between two parts of a piece of equipment (11, 21), namely a fixed part and a part rotatable about an axis of rotation of said fixed part, to provide a given degree of sealing of the equipment in respect of solid particles and/or fluids of external origin, comprising said two parts, a sealing piece and a compensation element, **characterized in that**:
- the sealing piece (321), having a given coefficient of thermal expansion, is provided with an end (322) bearing on a bearing surface (111) of a first one of the said parts (11) and is mounted in a sealed way in a rigid mechanical structure (323) connected to the second part (21),
- the compensation element (324), forming the link between said mechanical structure (323) and said second part (21) in a sealed way, said compensation element being thermally deformable, is designed in such a way that, when the temperature varies, the displacements of the mechanical structure (323) resulting from the deformations of the compensation element (324) ensure that said bearing end (322) of the sealing piece (321) is kept in contact with the bearing surface (111) of said first part (11) with the desired degree of sealing.

2. Dynamic joint according to Claim 1, in which the compensation element (324) is formed by a ring of deformable compensation material, having a given coefficient of thermal expansion, said ring being fixed to said second part (21) by a first interface (325) substantially parallel to the plane of the bearing surface (111) and facing the latter, and being fixed to the mechanical structure (323) by a second interface (326) substantially parallel to the first and on the opposite side of the first interface from the bearing surface, the product of the coefficient of expansion of the compensation material and the distance between the interfaces being adapted to the extent of deformation of the sealing piece in the range of temperature variation to ensure the desired degree of sealing.

3. Dynamic joint according to Claim 2, in which, when there is a thermal gradient between the sealing piece (321) and the compensation element (324), said product of the coefficient of expansion of the compensation material and the distance between the interfaces (325, 326) is also adapted to said gradient.

4. Dynamic joint according to Claim 2, in which the sealing piece (321) is formed from a block of deformable material having a given coefficient of expansion, fixed to the mechanical structure (323) by a support surface (327) which is substantially parallel to the bearing surface (111), the product of the coefficient of expansion of the compensation material and the distance between the interfaces (325, 326) being adapted to the product of the coefficient of expansion of said deformable material and the distance between said support surface (327) and the bearing end (322) of the sealing piece (321).

5. Dynamic joint according to Claim 4, in which the compensation material is identical to the deformable material from which the sealing piece (321) is formed.

6. Dynamic joint according to either one of Claims 4 and 5, in which the materials forming the sealing piece (321) and the compensation element (324) are of the elastomeric type.

7. Dynamic joint according to any of the preceding claims, in which the sealing piece (321) is a lip seal, the bearing end (322) consisting of one or more lips.

8. Dynamic joint according to Claim 7, in which the sealing piece (321) is a standard lip seal.

9. Rotary connection (3, 3') between two parts (1, 2) of a piece of equipment, namely a fixed part and a moving part, comprising a first flange (11) fixed to a first one of said parts, a second flange (21) fixed to the second part, a rotating bearing (31) mounted between the two flanges to enable the moving part to rotate about an axis of rotation (Δ) of the fixed part and a self-compensating dynamic joint (32) according to any one of the preceding claims, the bearing surface (111) being carried by said first flange (11) and the rigid mechanical structure (323) of the dynamic joint being supported by said second flange (21) of the second part.

10. Rotary connection according to Claim 9, in which each flange (11, 21) supports one or more baffles (110, 210), the baffles of the two flanges being interleaved to protect the sealing piece of the dynamic joint from external attack.

11. Rotary connection according to either one of Claims 9 and 10, in which said first flange comprises a heating element (112) in the proximity of said bearing surface.

12. Rotary connection according to Claim 11, in which said first flange also comprises a temperature sensor (113) in the proximity of said bearing surface for the control of said heating element.

## Patentansprüche

1. Selbstausgleichende dynamische Dichtung (32) zwischen zwei Teilen (11, 21) einer Einrichtung, einem ortsfesten Teil und einem um eine Drehachse des ortsfesten Teils drehbaren Teil, um einen gegebenen Dichtheitsgrad der Einrichtung gegenüber von außen kommenden festen Partikeln und/oder Flüssigkeiten zu gewährleisten, die die beiden Teile, ein Dichtungsbauteil und ein Kompensationselement aufweist, **dadurch gekennzeichnet, dass**:
- das Dichtungsbauteil (321) mit temperaturabhängigem gegebenem Dehnungskoeffizient mit einem auf einer Reibungsfläche (111) eines ersten der Teile (11) reibenden Ende (322) versehen ist und hermetisch dicht in einen steifen mechanischen Aufbau (323) in Verbindung mit dem zweiten Teil (21) eingebaut ist,
- das Kompensationselement (324), das die Verbindung zwischen dem mechanischen Aufbau (323) und dem zweiten Teil (21) hermetisch dicht herstellt, wobei das Kompensationselement temperaturabhängig verformbar ist, so dimensioniert wird, dass bei den Temperaturveränderungen die Verschiebungen des mechanischen Aufbaus (323), die aus den Verformungen des Kompensationselements (324) entstehen, die Aufrechterhaltung des Kontakts des reibenden Endes (322) des Dichtungsbauteils (321) mit der Reibungsfläche (111) des ersten Teils (11) entsprechend dem gewünschten Dichtungsgrad gewährleisten.

2. Dynamische Dichtung nach Anspruch 1, bei der das Kompensationselement (324) von einem Kranz aus verformbarem Kompensationsmaterial mit einem temperaturabhängigen gegebenen Dehnungskoeffizienten gebildet wird, wobei der Kranz am zweiten Teil (21) durch eine erste Grenzfläche (325) im Wesentlichen parallel zur Ebene der Reibungsfläche (111) und dieser gegenüber und am mechanischen Aufbau (323) durch eine zweite Grenzfläche (326) im Wesentlichen parallel zur ersten und entgegengesetzt zur Ebene der Reibungsfläche bezüglich der ersten Grenzfläche befestigt ist, wobei das Produkt aus dem Dehnungskoeffizienten des Kompensationsmaterials und dem Abstand zwischen den Grenzflächen an die Verformungsamplitude des Dichtungsbauteils im Temperaturänderungsbereich angepasst ist, um den gesuchten Dichtheitsgrad zu gewährleisten.

3. Dynamische Dichtung nach Anspruch 2, bei der bei einem zwischen dem Dichtungsbauteil (321) und dem Kompensationselement (324) vorhandenen Wärmegradienten das Produkt aus dem Dehnungskoeffizienten des Kompensationsmaterials und dem Abstand zwischen den Grenzflächen (325, 326) außerdem an den Gradienten angepasst ist.

4. Dynamische Dichtung nach Anspruch 2, bei der das Dichtungsbauteil (321) aus einem Block von verformbarem Material mit einem gegebenen Dehnungskoeffizienten gebildet wird, der am mechanischen Aufbau (323) durch eine Auflagefläche (327) befestigt ist, die im Wesentlichen parallel zur Reibungsfläche (111) liegt, wobei das Produkt aus dem Dehnungskoeffizienten des Kompensationsmaterials und dem Abstand zwischen den Grenzflächen (325, 326) an das Produkt aus dem Dehnungskoeffizienten des verformbaren Materials und dem Abstand zwischen der Auflagefläche (327) und dem reibenden Ende (322) des Dichtungsbauteils (321) angepasst ist.

5. Dynamische Dichtung nach Anspruch 4, bei der das Kompensationsmaterial gleich dem verformbaren Material ist, aus dem das Dichtungsbauteil (321) gebildet wird.

6. Dynamische Dichtung nach einem der Ansprüche 4 oder 5, bei der die das Dichtungsbauteil (321) und das Kompensationselement (324) bildenden Materialien vom Typ Elastomermaterial sind.

7. Dynamische Dichtung nach einem der vorhergehenden Ansprüche, bei der das Dichtungsbauteil (321) eine Lippendichtung ist, wobei das reibende Ende (322) aus einer oder mehreren Lippen besteht.

8. Dynamische Dichtung nach Anspruch 7, bei der das Dichtungsbauteil (321) eine Lippendichtung vom Standardtyp ist.

9. Drehbare Verbindung (3, 3') zwischen zwei Teilen (1, 2) einer Einrichtung, einem ortsfesten Teil und einem beweglichen Teil, mit einem ersten Flansch (11), der mit einem ersten der Teile fest verbunden ist, mit einem zweiten Flansch (21), der mit dem zweiten Teil fest verbunden ist, mit einem drehenden Lager (31), das zwischen den beiden Flanschen montiert ist, um die Drehung des beweglichen Teils um eine Drehachse (Δ) des ortsfesten Teils zu gewährleisten, und mit einer selbstausgleichenden dynamischen Dichtung (32) nach einem der vorhergehenden Ansprüche, wobei die Reibungsfläche (111) sich auf dem ersten Flansch (11) befindet und der steife mechanische Aufbau (323) der dynamischen Dichtung vom zweiten Flansch (21) des zweiten Teils getragen wird.

10. Drehbare Verbindung nach Anspruch 9, bei der jeder Flansch (11, 21) eine oder mehrere Umlenkplatten (110, 210) trägt, wobei die Umlenkplatten der beiden Flansche ineinander gefügt sind, um das Dichtungsbauteil der dynamischen Dichtung vor äußeren Angriffen zu schützen.

11. Drehbare Verbindung nach einem der Ansprüche 9 oder 10, bei der der erste Flansch in der Nähe der Reibungsfläche ein Heizelement (112) aufweist.

12. Drehbare Verbindung nach Anspruch 11, bei der der erste Flansch außerdem in der Nähe der Reibungsfläche einen Temperaturfühler (113) zur Kontrolle des Heizelements aufweist.
